Europäisches Patentamt

European Patent Office

Office européen des brevets

(19)

(11) Veröffentlichungsnummer: **0 344 093**
**A2**

(12) ## EUROPÄISCHE PATENTANMELDUNG

(21) Anmeldenummer: **89730104.0**

(22) Anmeldetag: **13.04.89**

(51) Int. Cl.⁴: **F 16 B 13/06**

(30) Priorität: **20.04.88 DE 3813892**

(43) Veröffentlichungstag der Anmeldung:
**29.11.89 Patentblatt 89/48**

(84) Benannte Vertragsstaaten:
**BE DE FR GB IT LU NL SE**

(71) Anmelder: **MANNESMANN Aktiengesellschaft**
**Mannesmannufer 2**
**D-4000 Düsseldorf 1 (DE)**

(72) Erfinder: **Becker, Klaus, Dr.-Ing.**
**Haydnstrasse 5**
**D-5802 Wetter (DE)**

**Ostholt, Rüdiger**
**Schwelmer Strasse 74**
**D-5802 Wetter (DE)**

(74) Vertreter: **Meissner, Peter E., Dipl.-Ing. et al**
**Meissner & Meissner Patentanwälte Herbertstrasse 22**
**D-1000 Berlin 33 Grunewald (DE)**

(54) **Befestigungselement mit einer Spreizhülse.**

(57) Die Erfindung betrifft ein Befestigungselement mit einer in einem Durchbruch einer Platte einsetzbaren Spreizhülze, die mit Längsschlitzen versehen ist und von einem darin einführbaren Spreizkern aufweitbar ist, wobei die Spreizhülze mit einem Kragen am Rand des Durchbruches bzw. der Außenwand der Platte anliegt. Um ein solches Befestigungselement so zu gestalten, daß es mit dem durch eine Platte ragenden Teil auch auf Biegung beanspruchbar ist, preiswert hergestellt werden kann und dazu in allen Lagen ohne besonderes Werkzeug leicht montier- und demontierbar ist, wird vorgeschlagen, daß die Spreizhülze (2) einen Innenrand (2.3) aufweist, mit dem sie im Spreizzustand an der Innenwand der Platte anliegt, wobei der Abstand zwischen dem Kragen (2.1) und dem Innenrand (2.3) gleich der Dicke der Platte ist.

Fig. 3

EP 0 344 093 A2

Beschreibung

## Befestigungselement mit einer Spreizhülse

Die Erfindung betrifft ein Befestigungselement nach den Merkmalen des Oberbegriffs des Hauptanspruches.

Derartige Befestigungselemente sind beispielsweise als Spreizdübel zum Einsetzen in Mauerwerksbohrungen, zum Befestigen einer Platte an einem Mauerwerk (DE-A-27 14 503) oder nach dem deutschen Gebrauchsmuster 78 14 794 zum Befestigen von Elementen an einer Platte bekannt, wobei sie lediglich in geringem Maße auf Abscherung beansprucht werden.

Aufgabe der Erfindung ist es, ein Befestigungselement der vorgenannten Art so zu gestalten, daß es mit dem durch eine Platte ragenden Teil auch auf Biegung beanspruchbar ist. Es soll dabei preiswert sein und in allen Lagen ohne besonderes Werkzeug leicht montierbar und demontierbar sein. Diese Aufgabe wird mit den Merkmalen im Kennzeichen des Anspruchs 1 gelöst. Der an der Innenwand anliegende Innenrand der Hülse bildet zusammen mit dem an der Außenwand der Platte anliegenden Kragen nach dem Einschlagen des Kerns eine so stabile Befestigung, daß die Hülse auch wie ein Kragträger auf Biegung beanspruchbar ist.

Der Spreizkern liegt dabei mit einem Kopf an dem Kragen der Hülse an, die vor dem Innenrand einen sich in Einschubrichtung erweiternden Ansteigebereich und davor einen zylindrischen Bereich hat, auf dem die zu tragende Last abstützbar ist. Der Kopf des Kerns dient zum Anfassen beim Entfernen aus der Hülse, die aus einem festen Thermoplast hergestellt sein kann und Einschnitte für Spreiznasen des Kernes hat, der die Hülse mit ihrem Anlagenbereich gegen den Durchbruch der Platte drückt und dazu ein Übermaß hat, das je nach Größe des Spreiz elementes und Werkstoffhärte 0,05 bis 0,5 mm beträgt.

Die Hülse kann in anderer Ausgestaltung der Erfindung auch aus Metall in Form eines Blechstreifens hergestellt sein, der vorzugsweise fünf Einschnitte hat. Dieses Blechteil erhält beim Wickeln auf einen Dorn im einschnittfreien Abschnitt einen zylindrischen Bereich, an dem sich der eingeschnittene Teil als Sechseck mit einem Kegelbereich, den Innenwandbereich, den Anlagenbereich und den Kragen anschließen. Die Ränder des Blechteiles bilden einen Schlitz.

Der Kern ist aus Kunststoff hergestellt und hat eine kegelstumpfförmige Spitze, dessen Kegelstumpfende zum Verhindern des unbeabsichtigten Herausrutschens einen größeren Durchmesser hat als der daran anschließende zylindrische Anlagenbereich. Außerdem hat der Kern an der Spitze eine fadenförmiges Verbindungselement zu einem Hals mit einem Kopf, mit dem man über den Kern auch die Hülse wieder aus der Platte herausziehen kann. Zum Vormontieren wird der Kopf vor die Öffnung an der Spitze der Hülse gelegt und der Faden durch den Schlitz zwischen den Rändern des Blechstreifens in das Innere der Hülse geführt. Die erfindungsgemäßen Befestigungselemente können - aufgrund der Möglichkeit Biegekräfte aufzunehmen - bei entsprechender Anwendung auch Lager in Förderbahnen halten. Sie können gewartet bzw. die Tragrollen inspiziert werden.

Mehrere Ausführungsbeispiele der Erfindung sind in der Zeichnung dargestellt und im folgenden erläutert. Es zeigen:

Fig. 1 ein Einbaubeispiel eines Befestigungselementes an einer Förderbahn-Tragrolle,

Fig. 2 eine Seitenansicht von Fig. 1,

Fig. 3 eine Metall-Hülse in der Seitenansicht bzw. im Längsschnitt

Fig. 4 die Seitenansicht von Fig. 3,

Fig. 5 eine Abwicklung des Befestigungselementes nach Fig. 3,

Fig. 6 eine Kunststoff-Hülse in der Seitenansicht

Fig. 7 den Schnitt VII - VII durch die Fig. 6,

Fig. 8 die Seitenansicht von Fig. 6,

Fig. 9 einen Kern in der Seitenansicht

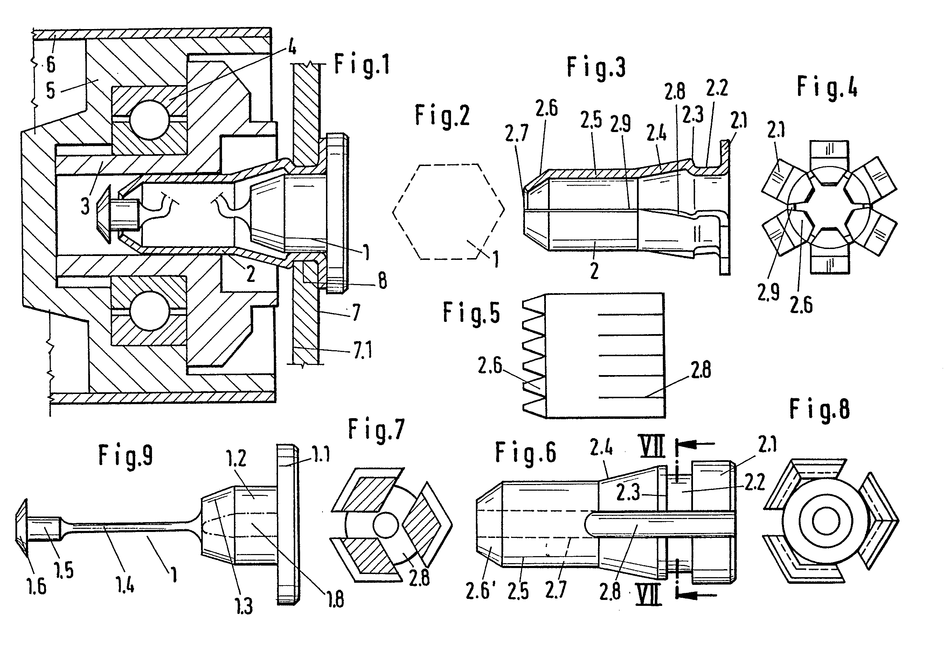

Fig. 1 zeigt das Ende einer Förderbahn-Tragrolle 6, die mit einem Rolleneinsatz 5 versehen ist und sich damit über Lager 4 und ein Halteelement 3 auf eine Hülse 2 abstützt, deren Anlagebereich 2.2 von einem Kern 1 gegen die Wand eines Durchbruches 8 einer Platte 7 bzw. Seitenwange der Förderbahn gepreßt wird. Bei Verwendung dieser aus Metall hergestellten Hülse beträgt der Ableitwiderstand zum Abbau elektrostatischer Aufladungen weniger als 10 Mio. Ohm. Diese elektrostatischen Aufladungen können beim Drehen der Rollen entstehen und sollen nach Möglichkeit abgeleitet werden. Falls die mit Durchbrüchen versehene Seitenwange vor dem Zusammenbau lackiert wurde, wird der Lack im Durchbruchbereich beim Einschlagen der Metall-Hülse abgekratzt und eine einwandfreie elektrische Verbindung zwischen der Hülse und der Seitenwange geschaffen.

Die in den Fig. 1 und 3 gezeichnete Hülse 2 ist aus einem ca. 1 mm dicken Blech hergestellt, das in der Abwicklung in Fig. 5 gezeigt ist. Es hat auf einem Ende fünf Einschnitte 2.8 und auf dem anderen Ende fünf spitze Ausschnitte bzw. Randabschnitte, so daß der dazwischen verbleibende Teil nach dem Zusammenrollen einen Pyramidenstumpf 2.6 bildet. Der nicht eingeschnittene Bereich 2.5 wird beim Rollen zylindrisch, und der eingeschnittene Teil bildet zunächst einen im Durchmesser sich vergrößernden Ansteigebereich 2.4 mit einem zum Kern hin abgekanteten Innenrand 2.3, an den sich ein sechseckiger Anlagebereich 2.2 für den Durchbruch 8 mit abgewinkelten Kragenbereichen 2.1 anschließt.

Wesentlich ist, daß die Hülse beim Einführen in den Durchbruch verent wird und dann im Durchbruch quasi auf ihren Ausgangsdurchmesser zurückgeht und dabei im Durchbruch einschnappt.

In diese Hülse 2 wird der in Fig. 9 gezeichnete Kern 1 eingeschlagen. Er hat zum Aufweiten des Anlagebereiches 2.2 der Hülse 2 eine Kegelstumpf 1.3 mit einem Anlagebereich 1.2 und einem Kopf 1.1. Damit der Kern 1 nicht unbeabsichtigt aus der Hülse 2 herausrutschen kann, ist der größte Durchmesser des Kegelstumpfes 1.3 um ca. 0,2 mm größer als der Durchmesser des Anlagebereiches 1.2. An den Kegelstumpf 1.3 schließt sich das fadenförmige Verbindungselement 1.4 mit einem zylindrischen Hals 1.5 an, der in der Kegelstumpfspitze 2.6 gehalten ist.

Zum Entfernen der Hülse wird zunächst der Kern 1 an seinem Greifkopf 1.1 ergriffen und zurückgezogen, wobei das in Fig. 1 gekrümmte Verbindungselement 1.4 gestreckt wird. Man kann dann den Kern 1 am Greifkopf 1.1 gut erfassen und über das Verbindungselement 1.4 und den Kopf 1.6 die Hülse 2 aus dem Durchbruch 8 herausziehen.

Für bestimmte Einsatzfälle kann auch eine aus Kunststoff hergestellte Hülse 2 nach den Fig. 6 bis 8 verwendet werden. Auch diese Hülse liegt mit einem Kragen 2.1 von außen an der Platte 7 bzw. Seitenwange an und füllt mit einem zylindrischen oder sechseckigen Anlagebereich 2.2 den Durchbruch 8 aus und liegt mit dem Innenrand 2.3 an der Innenwand 7.1 an. Die Hülse 2 wird beim Einsetzen in den Durchbruch 8 über den Ansteigebereich 2.4 zusammengedrückt, wobei die drei in den Figuren 6 und 7 erkennbaren Einschnitte 2.8 verengt werden. Auch diese Hülse hat einen zylindrischen Bereich 2.5 zum Tragen des Halteelementes 3 sowie eine längere Öffnung 2.7 zum Durchlassen des Verbindungselementes 1.4 des Kerns 1 mit einem Spitz-Kopf 1.6, der sich vor den Kegelstumpf 2.6 legt. In die Einschnitte 2.8 ragen Spreiznasen des Kerns 1 hinein. Eine dieser Spreiznasen 1.8 ist in der Fig. 9 strichpunktiert dargestellt.

## Patentansprüche

1. Befestigungselement, bestehend aus einer in einen Durchbruch einer Platte einsetzbaren Hülse (2), die mit Längsschlitzen (2.8) versehen und von einem darin einführbaren Kern (1) aufweitbar ist, wobei die Hülse im Einbauzustand mit einem Kragen (2.1) am Rand des Durchbruches (8) bzw. der Außenwand der Platte (9) und ein Innenrand (2.3) der Hülse an der Innenwand der Platte anliegt und wobei der Abstand zwischen Kragen (2.1) und Innenrand (2.3) gleich der Dicke der Platte (7) ist und wobei ferner der Anlagebereich (2.2) der Hülse am Rand des Durchbruches (8) zylindrisch ist, sich daran - in Richtung des vorderen Endes der Hülse - ein sich verjüngender Bereich (2.4) und daran ein zylindrischer Bereich (2.5) anschließt,
**dadurch gekennzeichnet**,
- daß der Kern (1) aus hartem Kunststoff hergestellt ist, eine kegelstumpfförmige Spitze (1.3) hat und mit einem zylindrischen Anlagebereich (1.2) am Anlagebereich (2.2) der Hülse (2) anliegt, wobei das dicke Ende des Kegelstumpfes (1.3) einen etwas größeren Durchmesser hat als der Anlagebereich (1.2) des Kerns (1),
- daß auf dem zylindrischen Bereich (2.5) ein Halteelement (3) für eine Förderbahn-Tragrolle (6) angeordnet ist und

- daß die Platte (7) mit dem Durchbruch (8) eine Seitenwange einer Förderbahn ist.

2. Befestigungselement nach Anspruch 1,
**dadurch gekennzeichnet**,
daß die Hülse (2) aus einem festen Thermoplast hergestellt ist und daß der Kern (1) mit Spreiznasen (1.8) aufweitend in Einschnitte (2.8) der Hülse (2) hineinragt.

3. Befestigungselement nach Anspruch 2,
**dadurch gekennzeichnet**,
daß drei Einschnitte (2.8) und Spreiznasen (1.8) vorhanden sind.

4. Befestigungselement nach Anspruch 1,
**dadurch gekennzeichnet**,
daß die Hülse (2) aus Metall hergestellt ist.

5. Befestigungselement nach Anspruch 4,
**dadurch gekennzeichnet**,
daß die Hülse (2) aus einem Blechteil hergestellt ist und mehrere Einschnitte (2.8) hat, die vom zylindrischen Bereich (2.5) bis zum Kragen (2.1) reichen, wobei die zwischen den Einschnitten (2.8) vorhandenen Abschnitte den Ansteigebereich (2.4), Innenrand (2.3), Anlagebereich (2.2) und den Kragen (2.1) bilden.

6. Befestigungselement nach Anspruch 5,
**dadurch gekennzeichnet**,
daß die Hülse (2) fünf Einschnitte (2.8) hat.

7. Befestigungselement nach einem der Ansprüche 1 bis 6,
**dadurch gekennzeichnet**,
daß der Kern (1) an seiner Spitze ein fadenförmiges Verbindungselement (1.4) für eine von innen an der Kegelstumpfspitze (2.6) der Hülse (2) anliegenden Hals (1.5) hat, der mit einem Kopf (1.6) durch eine Öffnung (2.7) der Kegelstumpfspitze (2.6) ragt.